Europäisches Patentamt

European Patent Office

Office européen des brevets

(11) Veröffentlichungsnummer: **0 124 001**
**B1**

## EUROPÄISCHE PATENTSCHRIFT

(45) Veröffentlichungstag der Patentschrift: **09.01.91**

(51) Int. Cl.⁵: **B 26 D 3/28** // B26D1/547, B26F3/12

(21) Anmeldenummer: **84104272.4**

(22) Anmeldetag: **16.04.84**

(54) **Schneidgerät für Platten oder Blöcke aus Kunststoff.**

(30) Priorität: 02.05.83 CH 2353/83
07.09.83 CH 4884/83

(43) Veröffentlichungstag der Anmeldung:
07.11.84 Patentblatt 84/45

(45) Bekanntmachung des Hinweises auf die
Patenterteilung:
09.01.91 Patentblatt 91/02

(84) Benannte Vertragsstaaten:
AT BE CH DE FR GB IT LI NL SE

(56) Entgegenhaltungen:
CH-A- 375 518          US-A-1 741 753
DE-A-2 311 024         US-A-2 700 821
DE-A-2 347 436         US-A-2 827 084
DE-A-2 907 711         US-A-2 987 598
DE-C- 145 771          US-A-2 998 813
DE-C- 192 851          US-A-3 018 355
FR-A-2 158 204         US-A-3 757 617
GB-A- 6 478            US-A-3 805 655
GB-A- 798 883

(73) Patentinhaber: Schwarz, Bernhard
Rigastrasse 11
CH-7000 Chur (CH)

(72) Erfinder: Schwarz, Bernhard
Rigastrasse 11
CH-7000 Chur (CH)

(74) Vertreter: Riederer, Conrad A., Dr.
Bahnhofstrasse 10
CH-7310 Bad Ragaz (CH)

Courier Press, Leamington Spa, England.

## Beschreibung

Die Erfindung betrifft ein Schneidgerät für Platten oder Blökke aus Kunststoff, mit einem von einem Support getragenen Schneiddraht und mit einer mit einem Kanal zur Aufnahme des Schneiddrahtes versehenen Auflage für die Platte oder den Block, wobei Auflage und Schneiddraht relativ zueinander beweglich sind.

Im Baugewerbe und in der Verpackungsindustrie haben in den letzten Jahren Schaumkunststoffe, z.B. "Styropor", einen grossen Anwendungsbereich gefunden. Schaumkunststoffplatten werden beispielsweise für sogenannte Vollwärmeschutzfassaden verwendet. Eine sachgemässe Gebäudeisolation erfordert ein genaues Anpassen der Platten. Werden die Platten nicht massgerecht geschnitten, so können Kältebrükken entstehen, welche die Isolationswirkung stark beeinträchtigen. Im Betonbau werden auch für Aussparungen Schaumkunststoffplatten oder -blöcke verwendet, die ganz verschiedene Formen aufweisen können.

Die GB—A—798 883 beschreibt eine Schneidmaschine für weiche Gegenstände, wie z.B. Brot, Kunststoffmaterial oder Schaumgummi, in eine Vielzahl von Scheiben. Zu diesem Zweck besitzt die Schneidmaschine einen auf- und abbeweglichen Rahmen mit einer Vielzahl von Messern und einer, entgegen der Kraft einer Feder, waagrecht gegen die Messer beweglichen Platte, mit welcher der zu bearbeitende Gegenstand gegen die Messer bewegt werden kann. Dieses Schneidgerät eignet sich nicht zur Verwendung auf einem Bauplatz oder einem Baugerüst. Es können mit dem beschriebenen Schneidgerät auch keine Gehrungsschnitte ausgeführt werden.

Es ist daher Aufgabe er Erfindung, ein Schneidgerät zu schaffen, welches besonders handlich ist, damit es auch auf dem Bauplatz, insbesondere auf einem Baugerüst, ohne Schwierigkeiten verwendet werden kann. Es sollte nicht nur das Zuschneiden von Schaumkunststoffplatten ermöglichen, sondern auch einen sogenannten Gehrungsschnitt ermöglichen, also einen Schnitt von beispielsweise 45° zur Plattenoberfläche. Des weiteren sollte es möglich sein, z.B. Ausschnitte für Rohre, Dachsparren und dergleichen anzubringen.

Zur Lösung dieser Aufgabe ist das Schneidgerät gemäss der Erfindung dadurch gekennzeichnet, dass eine Verstelleinrichtung zum Verstellen des Winkels der Auflage in bezug auf die Bewegungseinrichtung der Auflage beim Schneidvorgang vorgesehen ist, dass in der Auflage mindestens eine Nut angeordnet ist, die einen in dieser Nut verschiebbaren und in der gewünschten Stellung feststellbaren Massstab aufnimmt, und dass ein Seitenanschlag an diesem Massstab angeordnet ist. Durch die Verstellung des Winkels der Auflage in bezug auf die Bewegungsrichtung der Auflage wird ein Gehrungsschnitt ermöglicht. Der Seitenanschlag ermöglicht es, noch eine Schmalseite der Platte anzuschlagen, so dass die Lage der Platte nach dieser Seite hin bestimmt ist.

Vorteilhaft ist auch, dass bei paralleler Anordnung von Seitenanschlag und Schneiddraht der Abstand zwischen diesen Teilen durch den Massstab angegeben wird.

Mit Vorteil wird ein Bewegungsdämpfer, z.B. in Form einer Gasfeder, vorgesehen, welcher für eine vorbestimmte Geschwindigkeit in Schnittrichtung sorgt. Damit kann eine optimale Schnittgeschwindigkeit erreicht werden. Es ist auch möglich, eine Arretierung für die obere und untere Stellung der Auflage vorzusehen. Diese Arretierung kann beispielsweise mittels eines Hebels oder durch nochmaliges Drücken gelöst werden. Auf diese Weise kann das Ausrichten der zu schneidenden Platte erleichtert werden.

Zweckmässigerweise ist eine Parallelführung für die Auflage vorgesehen. Mit einer solchen Parallelführung wird erreicht, dass die Schnittgeschwindigkeit über die ganze Plattenlänge überall dieselbe ist. Die Parallelführung kann beispielswiese durch zwei Säulen oder Schienen gebildet werden. Es ist aber auch möglich, die Parallelführung durch eine Schere zu erzeugen. Letzteres gegibt eine besonders einfache Konstruktion, die auch bei ungleicher Belastung der Auflage gut funktioniert. Zweckmässigerweise ist eine Rückstellfeder für die Auflage vorgesehen. Dies ermöglicht es beispielsweise, die zu schneidende Isolierplatte auf die Auflage zu legen, in Schnittlage zu bringen und gegen die Federkraft an den Schneiddraht zu drücken. Es ist aber auch möglich, anders zu verfahren, indem zuerst die Isolierplatte auf die Auflage gelegt, diese entgegen der Kraft der Rückstellfeder bewegt wird, in die Schneidlage gebracht wird und dann geschnitten wird, indem der Händedruck auf die Isolierplatte vermindert wird. Die Auflage bewegt sich dann zusammen mit der Isolierpaltte unter dem Einfluss der Rückstellfeder gegen den Schneiddraht. Wenn zusätzlich noch ein Bewegungsverzögerer vorgesehen ist, wird die Platte mit der optimalen Schnittgeschwindigkeit geschnitten. Als Bewegungsverzögerer kann eine Gasfeder dienen, welche eine entsprechende Dämpfung aufweist.

Da das Schneidgerät sehr leicht ist, ist es auch möglich, dieses auf die zu schneidende Isolierplatte zu legen und in Schneidstellung zu bringen. Beim Hinunterdrücken des Schneidelementes wird dann die Platte geschnitten. Vorteilhaft wird an der Auflage ein Anschlag für eine Schmalfläche der Isolierplatte vorgesehen, wobei der Winkel des Anschlags in bezug auf das Schneidorgan zweckmässigerweise verstellbar ist. Auf diese Weise kann erreicht werden, dass die Schnittfläche immer in einem bestimmten Winkel zu der am Anschlag anliegenden Schmalfläche der Isolierplatte zu stehen kommt.

Gemäss einer vorteilhaften Ausführungsform ist an der Auflage ein Auflagebrett vorgesehen, das in einem Winkel zur Auflage stellbar ist. Dies ermöglicht es, das Gerät auch z.B. mit senkrecht angeordnetem Schneiddraht zu benutzen. Dabei kann die Platte allein bewegt werden, um beispielsweise runde Konturen auszuschneiden.

Der Support für den Schneiddraht besteht vorteilhaft aus zwei teleskopisch verschiebbaren Teilen. Auf diese Weise können Schneiddrähte verschiedener Länge verwendet werden. Für kleine Werkstücke wird vorteilhaft ein kurzer Schneiddraht verwendet, was das Gerät handlicher macht.

Vorteilhaft ist der Schneiddraht mit mindestens einem seiner Enden an einer Justiereinrichtung befestigt. Diese ermöglicht es, den Schneiddraht rechtwinklig zur Anlagefläche bzw. parallel zur Auflage einzustellen.

Vorteilhaft ist auch eine verstellbare Anschlagvorrichtung vorgesehen, welche die Relativbewegung zwischen Schneiddraht und Auflage in beiden Richtungen begrenzt. Diese Anschlagvorrichtung ermöglicht es, Nutten und Abschnitte gleichmässig wiederholbar aus einer Platte zu schneiden.

Es ist vorteilhaft, den Schneiddraht mindestens an einem Ende an einem Messer zu befestigen. Mit diesem Messer ist es möglich, in eine Isolierplatte hineinzustechen, um dann mit dem Schneiddraht Schnitte auszuführen.

Eine besonders vorteilhafte Ausführungsform der Erfindung sieht vor, dass in der Auflage ein Kanal vorgesehen ist, in welchem sich in der Ruhestellung der Schneiddraht befindet.

Es ist möglich, den Schneiddraht als Sägedraht auszubilden, wenn ein Ende des Sägedrahts mittels einer Feder mit dem Support verbunden und das andere Ende des Sägedrahts an eine am Support angeordnete, reziprozierende Antriebsvorrichtung angeschlossen ist. Dies ermöglicht es, auch Platten zu schneiden, die mit einem elektrisch beheizten Schneiddraht nicht geschnitten werden können. Die Antriebsvorrichtung für den Sägedraht wird vorteilhaft durch eine handelsübliche Sticksäge gebildet, an deren Kopf statt eines Stichsägeblatts das genannte andere Ende des Sägedrahts befestigt ist. Dies ergibt nicht nur eine besonders billige Ausführung des Schneidgeräts, sondern erlaubt es auch, die Stichsäge vom Support abzunehmen und als Sticksäge zu verwenden.

Wenn ein längsverstellbarer Halter zur Befestigung eines Endes des Schneiddrahts vorgesehen wird, ist ein Umrüsten von einem elektrischen Schneiddraht auf einen Sägedraht sehr leicht zu bestellen.

Vorteilhaft ist auch im Auflagebrett mindestens eine Nut angeordnet, um den dieser Nut verschiebbaren und in der gewünschten Stellung feststellbaren Massstab aufzunehmen. Die aus Seitenanschlag und Massstab so gebildete Anschlageinheit lässt sich somit je nach Bedarf auf der Auflage oder auf dem daran befestigten Auflagebrett verwenden.

Zweckmässigerweise ist am Massstab ein verstellbarer und in der gewünschten Stellung arretierbarer Winkelmasser angeordnet, mit dem die Winkelstellung des Seitenanschlags einstellbar ist. Dies ermöglicht die Herstellung von Werkstücken, bei denen die Flächen in einem anderen als rechteckigen Winkel zueinander stehen müssen.

Ausführungsbeispiele der Erfindung werden nun unter Bezugnahme auf die Zeichnung beschrieben. Es zeigt:

Fig. 1 das Gerät bei der Verwendung mit stationärem Schneiddraht in horizontaler Anordnung,

Fig. 2 die Verwendung des Gerätes mit stationärem Schneiddraht in vertikaler Anordnung,

Fig. 3 das Gerät bei seiner Verwendung als mobiles Gerät, wobei es von oben auf eine stationäre Platte gelegt wird, die geschnitten werden muss,

Fig. 4 eine Schraubklemme zur Fixierung der teleskopisch bewegbaren Teile des Supports für den Schneiddraht,

Fig. 5 bis 11 schematische Darstellung der verschiedenen Anwendungsmöglichkeiten des Schneidgerätes,

Fig. 12 ein zweites Ausführungsbeispiel des Gerätes,

Fig. 12a die Befestigung des Schneiddrahtes an Messern,

Fig. 13 eine Ansicht von oben des Gerätes von Fig. 12,

Fig. 14 eine Isolierplatte mit herausgeschnittener Nut,

Fig. 15 ein drittes Ausführungsbeispiel des Gerätes,

Fig. 16 in perspektivischer Darstellung ein viertes, bevorzugtes Ausführungsbeispiel des Schneidgeräts bei der Verwendung mit stationärem Schneiddraht in horizontaler Anordnung,

Fig. 16a Verwendung des Gerätes von Fig. 16 als Handgerät,

Fig. 17 in perspektivischer Darstellung das Schneidgerät von Fig. 16 bei der Verwendung in vertikaler Anordnung,

Fig. 18 bis 20 das Schneidgerät in der Anordnung von Fig. 17 in drei verschiedenen Ansichten, nämlich

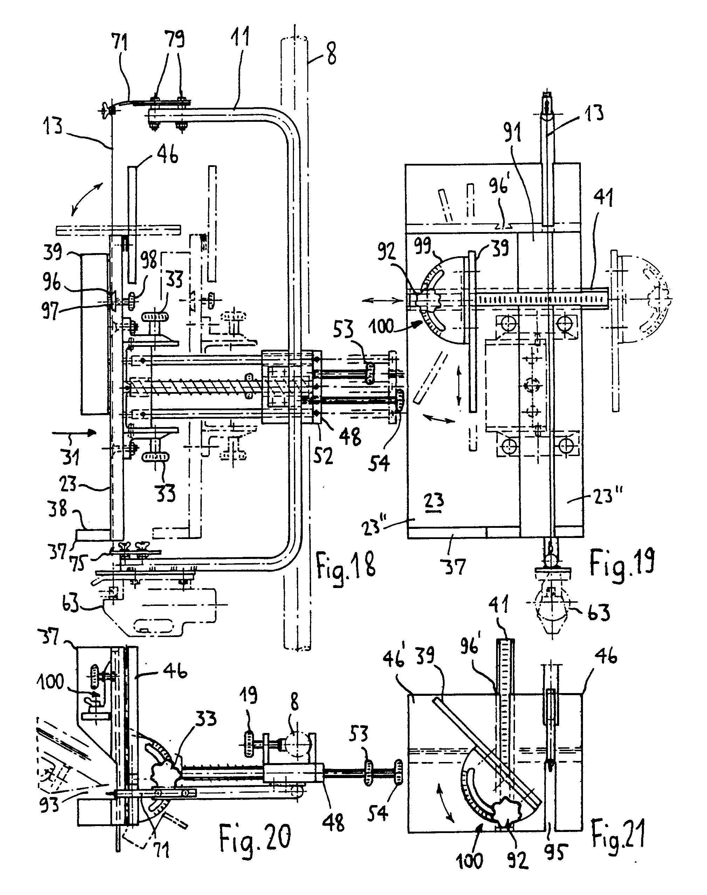

Fig. 18 in Ansicht von der Seite

Fig. 19 in Ansicht von vorn, wobei verschiedene Stellungen des Anschlags ersichtlich sind,

Fig. 20 in Ansicht von oben, wobei die Möglichkeit der Verstellung der Auflage für Gehrungsschnitte ersichtlich ist,

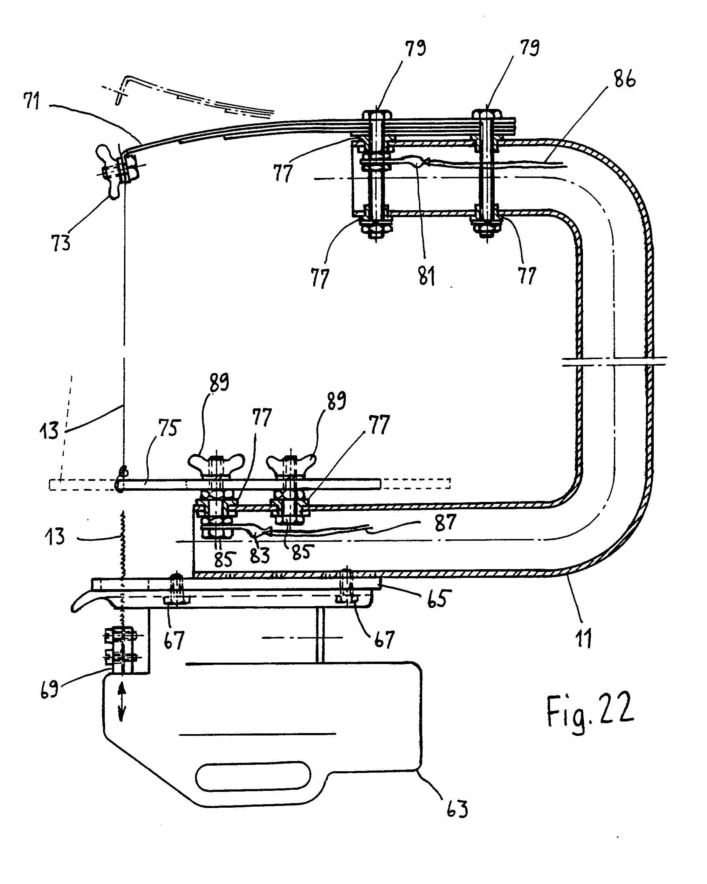

Fig. 21 eine Ansicht des Schneidgerätes von Fig. 19, jedoch mit heruntergeklapptem Auflagebrett und darauf angeordnetem Anschlag.

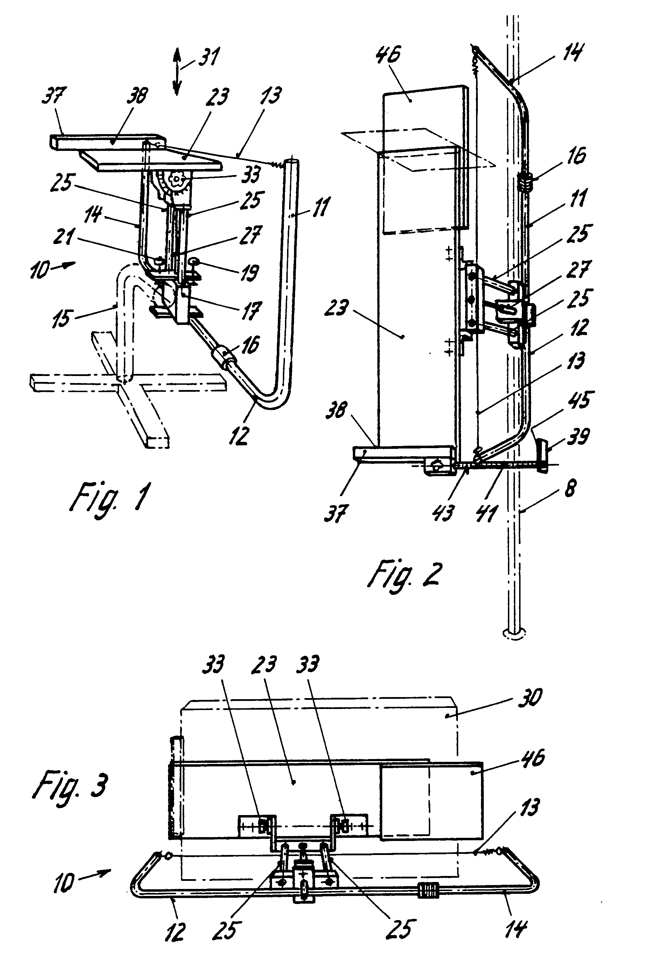

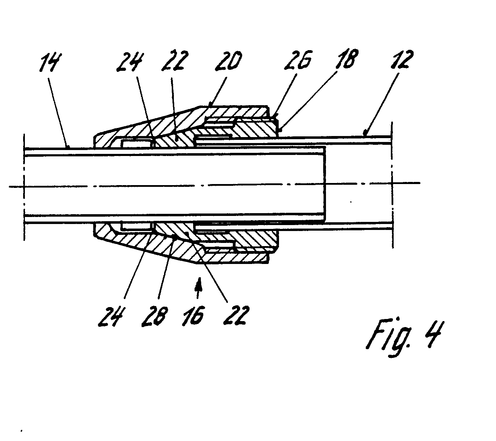

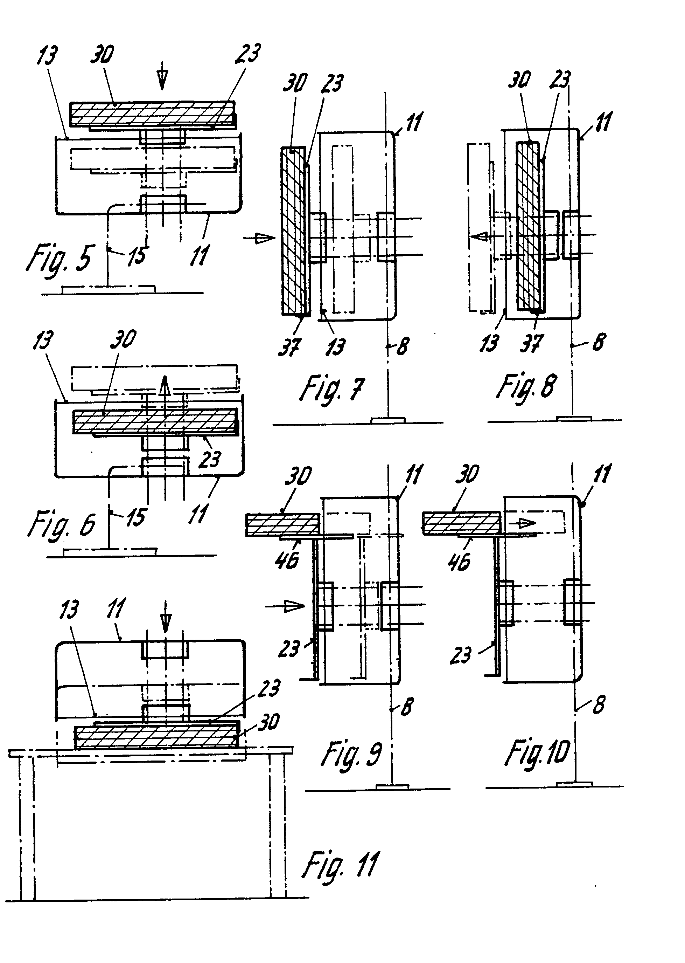

In Figur 1 ist das Gerät 10 an einem Ständer 15 befestigt. Das Schneidgerät 10 besitzt einen Support 11 für den Schneiddraht 13. Der Schneiddraht 13 wird beispielsweise durch einen elektrisch heizbaren Widerstandsdraht gebildet, der an eine nicht eingezeichnete Stromquelle angeschlossen ist. Die Stromzuleitungen erfolgen vorteilhaft durch das Innere des Rohrs 11. Der Schalter (nicht eingezeichnet) zum Ein- und Ausschalten des Stromes kann beispielsweise am Support 11 befestigt sein. Es kann aber auch ein Druckschalter vorgesehen sein, der beim Auflegen einer zu schneidenden Platte auf die Auflage 23 betätigt wird.

Der Support 11 besteht beispielsweise aus einem U-förmig gebogenen Rohr. Dieses Rohr und auch die meisten übrigen Teile des Gerätes bestehen zweckmässigerweise aus Leichtmetall, z.B. Aluminium. Dies ermöglicht den Bau eines relativ leichten Gerätes, das auch als Handgerät benützt werden kann. Der Support 11 ist beim gezeigten Ausführungsbeispiel aus zwei Teilen 12 und 14 gebildet, die teleskopartig zueinander verschiebbar sind, um die Schneidlänge des Schneiddrahtes 13 zu vergrössern oder zu verkleinern. Nach der Einstellung der Schneidlänge werden die beiden Teile 12, 14 z.B. mit einer Schraubklemme 16 in der eingestellten Lage fixiert.

Die Schraubklemme 16 kann von einer bekannten Bauart sein, wie sie in Figur 4 dargestellt wird. Demnach besteht die Schraubklemme 16 aus dem Klemmring 18 und der Konusmutter 20. Der Klemmring 18 sitzt auf dem Teil 12 und weist vier Arme 22 auf, die in vier radiale Oeffnungen 24 im Teil 12 eingreifen. Beim Festschrauben der Konusmutter 20 auf dem Gewinde 26 werden die Arme 22 durch den Innenkonus 28 gegen den Teil 14 gedrückt und halten diesen so in der gewünschten Lage fest.

Der Support 11 ist mit dem Träger 17 fest verbunden. Der Träger 17 weist auf jeder Seite eine Klemmvorrichtung 19, 21 auf, mit welcher das Gerät 10 an einem Ständer 15 (Fig. 1), einem Tisch oder einer Gerüststange 8 (Fig. 2) oder dergleichen befestigt werden kann.

Die Auflage 23 für die zu schneidenden Isolierplatten sind relativ zum Schneiddraht 13 beweglich. Bei den gezeigten Anwendungen von Figur 1 und 2 ist der Schneiddraht 13 fest und die Auflage 23 in Bezug auf den Schneiddraht 13 verschiebbar angeordnet. Um eine solche Relativbewegung zu ermöglichen, ist eine Parallelführung vorgesehen, die beim gezeigten Ausführungsbeispiel aus zwei in Abstand voneinander angeordneten Säulen 25 besteht. Anstatt dieser Säule könnte jedoch auch eine Schere zur Parallelführung verwendet werden. Eine Gasfeder 27 dient als Rückstellfeder, um die Auflage 23, nachdem sie aus der eingezeichneten Stellung nach unten bewegt wurde, wieder in die eingezeichnete stellung zu bringen. Anstelle einer Gasfeder könnten aber auch Schraubenfedern verwendet werden. Es sind aber im Handel Gasfedern erhältlich, welche in mindestens einer Richtung als Bewegungsdämpfer wirken. Die Verwendung einer solchen Gasfeder ermöglicht es, die durch die Dämpfung bewirkte Verzögerung der Bewegung dazu zu benützen, eine vorbestimmte Schnittgeschwindigkeit zu erreichen. Weiter sind im Handel Gasfedern vorhanden, die eine End- oder Anfangsarretierung aufweisen. Bevor eine Bewegung möglich ist, muss daher ein Hebel betätigt werden, oder es ist vorerst ein Druck in entgegengesetzter Richtung notwendig, um die Arretierung zu lösen. Wird somit eine solche handelsübliche Gasfeder mit End- und/oder Anfangsarretierung oder eine separate End- und/oder Anfangsarretierung verwendet, ergeben sich weitere Vorteile. Eine Arretierung gestattet es nämlich, die Platte in der gewünschten Stellung der Auflage bequem in die Schnittstellung zu bringen. Es kann dann die Arretierung gelöst werden, so dass der Schneidvorgang beginnt.

Beim gezeigten Ausführungsbeispiel ist die Auflagefläche 23 in Bezug auf die durch den Pfeil 31 angedeutete Bewegungsrichtung der Auflage 23 neigbar ausgestellt. Zu diesem Zeck ist eine nicht-eingezeichnete Drehachse parallel zum Schneiddraht 13 vorgesehen, wobei mit der Arretierschraube 33 der eingestellte Neigungswinkel der Auflage 23 fixiert werden kann. Dies ermöglicht es, auch Gehrungsschnitte vorzunehmen.

Ein Anschlag 37 ist vorgesehen, der eine normalerweise rechtwinklig zum Schneiddraht 13 ausgerichtete Anlagefläche 38 besitzt. Es können aber auch nicht eingezeichnete Mittel, z.B. Stellschrauben, vorgesehen sein, um den Winkel gegebenenfalls zu verstellen.

Es ist zweckmässig, noch einen verstellbaren Seitenanschlag 39 vorzusehen, wie dies in Figur 2 gezeigt wird. Dieser besteht im wesentlichen aus einer Stange 41 mit einer Skala 43, welche den Abstand zwischen den Seitenanschlagflächen 45 und dem Schneiddraht 13 angibt.

Wie die Figuren 2 und 3 zeigen, ist an der Auflage 23, z.B. aufsteckbar, ein drehbares Auflagebrett 46 befestigt. In der eingezeichneten Stellung befindet es sich in der Ruhelage. Wird es in die punktiert eingezeichnete Stellung (Fig. 2) gekippt, so dient es als zweite Auflagefläche, die anstelle der ersten Auflage 23 benutzt werden kann und für gewisse Arbeiten von Vorteil ist, z.B. wenn Löcher aus einer Platte herausgeschnitten werden müssen.

Es bestehen viele verschiedene Möglichkeiten zur Benutzung des Schneidgerätes. So kann das Gerät 10 in den in den Figuren 1 bis 3 gezeigten verschiedenen Lagen benützt werden. In den Figuren 1 und 2 ist das Gerät 10 fest angeordnet, wobei in der einen Lage der Schneiddraht waagrecht (Fig. 1) und in der anderen Lage senkrecht (Fig. 2) angeordnet ist. In Figur 3 wird das relativ leichte Gerät 10 als Handgerät benützt, indem es mit der Auflage 23 auf die zu schneidende Platte 30 aufgesetzt und dann der Support 12 so bewegt wird, dass der Schneiddraht 13 gegen die Platte 30 hin geführt wird, um diese zu schneiden.

Nachstehend werden nun die wichtigsten Benützungsarten näher beschrieben. In der Lage von Figur 1 ergeben sich die in den Figuren 5 und 6 gezeigten Benützungsarten. So kann die zu schneidende Platte auf die Auflage 23 gelegt und mit dieser zusammen nach unten bewegt werden, wobei der Schneiddraht 13 von unten in die Platte 30 eindringt und schneidet (Figur 5).

Es ist aber auch möglich, die Auflage 23 allein oder zusammen mit der Platte 30 in die untere Stellung zu bringen, worauf dann die Platte ausgerichtet wird und eine Schneidbewegung nach oben erfolgt, so dass der Schneiddraht 13 von oben nach unten in die Platte 30 eindringt und diese schneidet (Fig. 6).

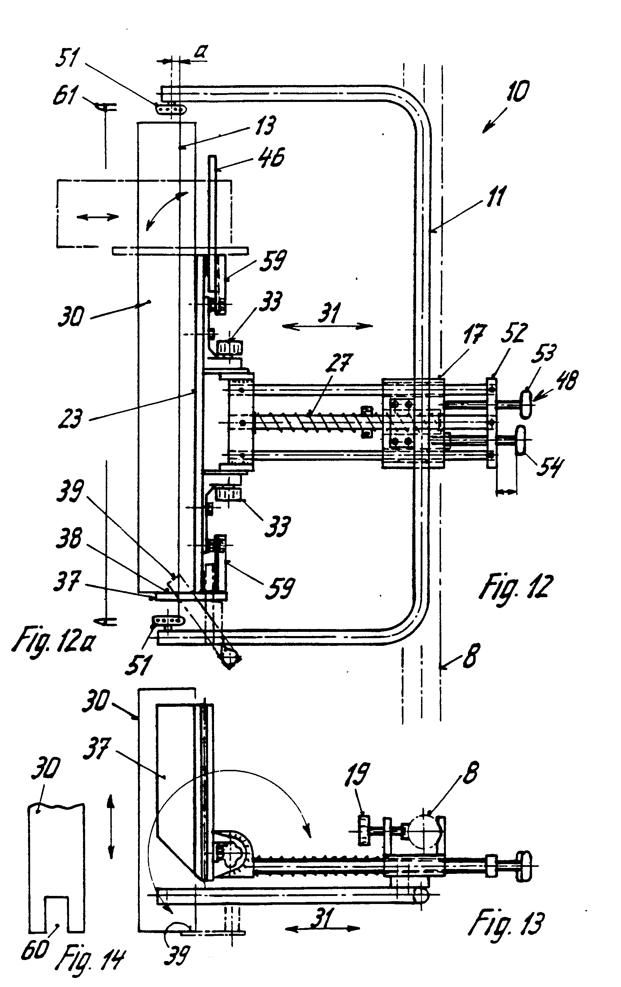

In gleicher Weise wie bei den Figuren 5 und 6 wird auch bei der Stellung des Schneidgerätes gemäss Figur 2 verfahren, wo der Schneiddraht 13 senkrecht angeordnet ist. Dies wird durch die Figuren 7 und 8 dargestellt.

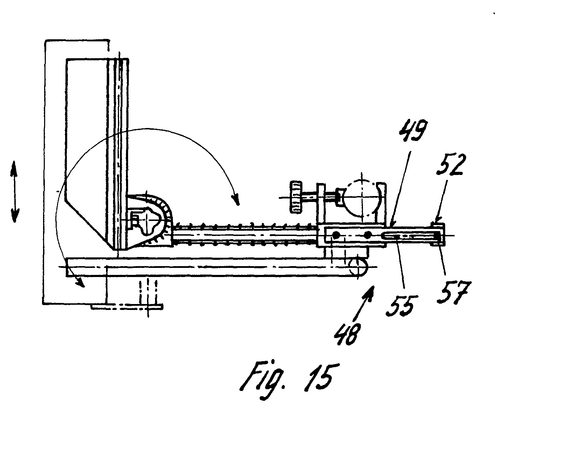

Wie aber bereits erwähnt, kann das Auflagebrett 46 in Figur 2 in die waagrechte Stellung gebracht werden. Es kann dann die zu schneidende Platte, wie in Figur 9 gezeigt, auf das Auflagebrett 46 gelegt und zusammen mit diesem gegen den Schneiddraht 13 geführt werden (Figur 9). Die Auflage 23 kann aber auch arretiert werden, so dass sich auch das Auflagebrett 46 nicht bewegt. In diesem Falle wird allein die Platte 30 gegen den Heizdraht geschoben. Dies ermöglicht auch das Schneiden von Rundungen oder dergleichen (Fig. 10). Zu diesen gezeigten Verwendungsarten sind aber noch weitere Variationen möglich. So kann beispielsweise das Auflagebrett 46 auch schräg angeordnet werden, um einen Schnitt in einem anderen Winkel als 90° zur Plattenoberfläche zu ermöglichen.

Bei der Verwendungsart von Figur 11 wird die zu schneidende Platte 30 auf einen Tisch oder dergleichen gelegt und das Gerät 10 als Handgerät verwendet, wie dies bereits unter Bezugnahme auf Figur 3 beschrieben wurde. Das Gerät wird also mit der Auflage 23 auf die Platte 30 aufgesetzt, wobei dann der Support 11 mit dem Schneiddraht 13 nach unten bewegt wird, um das freistehende Stück der Platte 30 abzuschneiden.

Das Schneidgerät gemäss der Ausführungsform der Figuren 12 und 13 ist ähnlich aufgebaut wie jenes der Figuren 1 bis 3, so dass zur Hauptsache die gleichen Bezugsziffern Verwendung finden können. Es sind jedoch einige Aenderungen vorgesehen, welche erhebliche Vorteile bringen.

Wie in Figur 2 wird die Benutzung des Schneidgerätes 10 nach der Befestigung an einer Gerüststange 8 dargestellt. Das Schneidgerät 10 besitzt einen Support 11 für den Schneiddraht 13. Der Schneiddraht 13 ist mindestens mit einem Ende an einer Justiereinrichtung 51 befestigt. Beim gezeigten Ausführungsbeispiel ist an jedem Ende eine Justiereinrichtung 51 vorgesehen. Diese bestehen z.B. aus Justierschrauben 51, an denen der Schneiddraht 13 so befestigt ist, dass die Schraubenachse und die Drahtachse nicht miteinander fluchten. Es. besteht vielmehr ein Abstand a. Diese exzentrische Anordnung des Schneiddrahtes 13 an den Justierschrauben 51 ermöglicht eine Justierung des Schneiddrahtes 13 durch Drehen der Justierschraube 51, so dass der Schneiddraht rechtwinklig zur Anlagefläche 38 bzw. parallel zur Auflage 23 eingestellt werden kann. Statt der Justierschrauben 51 können aber auch andere geeignete Justierelemente verwendet werden.

Der Support 11 besteht aus einem U-förmig gebogenen Rohr und ist mit dem Träger 17 fest verbunden. der Träger 17 weist eine Klemmvorrichtung 19 auf, mit welcher das Gerät 10 an einem Ständer 15 (Fig. 1) einem Tisch oder einer Gerüststange 8 (Fig. 12, 13) oder dergleichen befestigt werden kann. Die Auflage 23 für die zu schneidende Isolierplatte 30 kann mit dieser zusammen gegen den Schneiddraht 13 bewegt werden. Dazu dient die zuvor beschriebene Parallelführung mit den beiden Säulen 25.

Von grossem praktischem Interesse ist die verstellbare Anschlagvorrichtung 48 mit den Justierschrauben 53 und 54. Diese Justierschrauben ermöglichen es, Nuten und Ausschnitte gleichmässig wiederholbar aus einer Platte 30 zu schneiden (z.B. Figur 14). Die Justierschraube 53 ist in eine Gewindeloch im Block 52 eingeschraubt, der die Säulen 25 miteinander verbindet, und schlägt in der gezeigten Stellung am Träger 17 an, so dass eine weitere Bewegung der Auflage 23 unter dem Einfluss der Feder 27 beschränkt wird. Die Justierschraube 54 ist im Träger 17 eingeschraubt wird führt durch ein Durchgangsloch im Block 52. Sie dient dazu, eine Bewegung der Auflage in Richtung entgegen der Kraft der Feder 27 dadurch zu begrenzen, dass der Block 52 am Kopf der Justierschraube 54 anschlägt.

Die Anschlagvorrichtung 48 kann auch durch eine Schablone 49 (Fig. 15) gebildet werden, die am Träger 17 befestigt ist und einen Schlitz 55 von vorbestimmter Länge aufweist, um die Bewegung der Auflage 23 in jeder der beiden Richtungen zu begrenzen. Um eine solche Begrenzung zu erzielen greift ein am Block 52 angeordneter Stift 57 in den Schlitz 55 ein.

Die Auflagefläche 23 (Fig. 12) ist in Bezug auf die durch den Pfeil 31 angedeutete Bewegungsrichtung neigbar ausgestaltet. Der eingestellte Neigungswinkel kann durch die Arretierschrauben 33 fixiert werden. Ein Anschlag 37 ist vorgesehen, der eine normalerweise rechtwinklig zum Schneiddraht 13 ausgerichtete Anlagefläche 38 besitzt. Der Anschlag 37 ist aber zweckmässigerweise in die gestrichelt gezeichnete Stellung umklappbar. Zum Fixieren des Anschlages 37 dient der Riegel 59. Ein solcher Riegel 59 ist auch für das Auflagebrett 46 vorgesehen. Es ist zu beachten, dass di Riegel 59 den Anschlag 37 bzw. das Auflagebrett 46 in jeder der beiden Stellungen fixieren kann.

Es ist zweckmässig, einen verstellbaren Seitenanschlag 39 vorzusehen. Ein solcher wurde mit Bezug auf Figur 2 näher beschrieben. Der Seitenanschlag 39 ist nämlich von besonderem Vorteil in Kombination mit der Anschlagvorrichtung 48 für das Ausschneiden einer Nut 60 oder dergleichen, wie dies beispielsweise in Figur 14 dargestellt ist. Der Seitenanschlag 39 bestimmt dann die Tiefe der Nut 60.

Wie Fig. 12a zeigt, kann der Schneiddraht 13 an einem oder an beiden Enden an je einem Messer 61 befestigt sein, welches eine Verlängerung des Supports 11 darstellt und in ungefähr einem rechten Winkel zum Schneiddraht angeordnet ist. Mit diesen Messern 61 ist es auch möglich in eine Isolierplatte hineinzustechen, um dann mit dem Schneiddraht 13 Schnitte auszuführen.

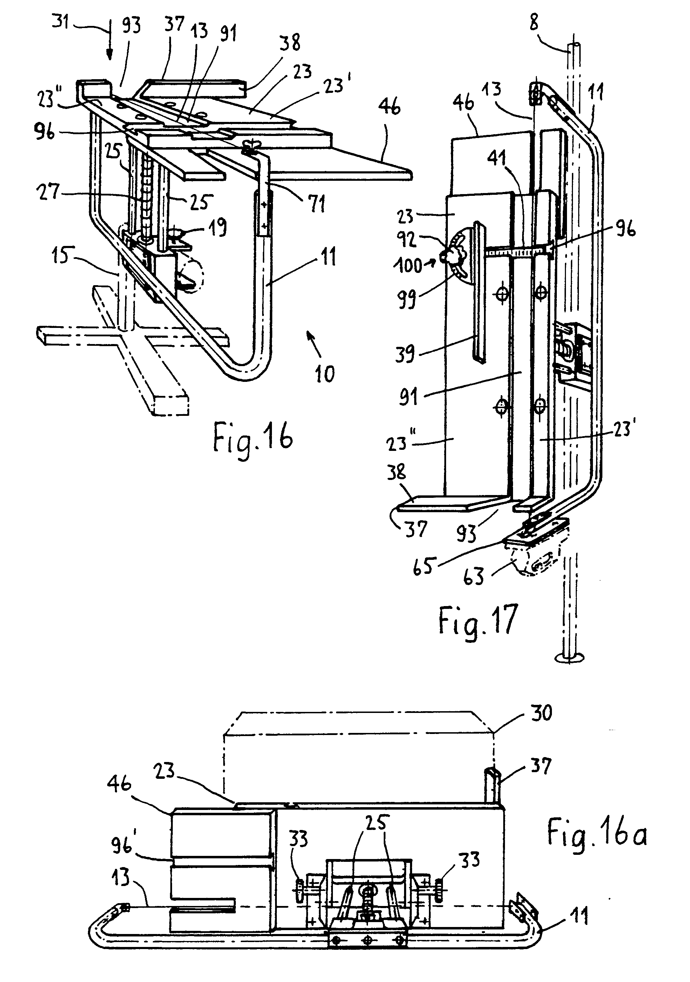

Auch das Schneidgerät gemäss der in den Figuren 16 bis 22 gezeigten bevorzugten Ausführungsform der Erfindung ist ähnlich aufgebaut wie jenes der Figuren 1 bis 3, so dass zur Hauptsache die gleichen Bezugsziffern Verwendung finden.

In Figur 16 ist das Schneidgerät 10 an einem Ständer 15 befestigt. Das Schneidgerät 10 besitzt einen Support 11 für den Schneiddraht 13. Der Schneiddraht 13 ist beispielsweise ein elektrisch heizbarer Widerstandsdraht, kann aber auch ein Sägedraht sein, der durch eine Stichsäge (in Figur 16 nicht eingezeichnet, aber in Fiugr 17 ersichtlich) hin- und herbewegt wird.

Wie Figur 22 zeigt, ist an einem Ende des Supports 11 eine Montageplatte 65 angeschweisst, an welcher eine kommerzielle Stichsäge 63 mit vier Schrauben 67 befestigbar ist. Statt einem Stichsägeblatt ist jedoch an dem hin- und hergehenden Kopf 69 ein mit Schneidzähnen versehener Schneiddraht 13 eingespannt. Um eine Hin- und Herbewegung des Schneiddrahts 13 zu ermögichen, ist am oberen Ende des Supports 11 eine Feder 71 vorgesehen. Es handelt sich dabei vorteilhaft um eine Blattfeder 71, welche an ihrem freien Ende eine Spanneinrichtung in Form einer Flügelschraube 73 zum Festspannen des Schneiddrahtes 13 aufweist. Wie Figur 22 fener zeigt, kann wahlweise ein elektrisch heizbarer Widerstandsdraht oder ein Sägedraht als Schneiddraht verwendet werden. Wird ein Widerstandsdraht verwendet, so kann natürlich die elektrische Stichsäge 63 abgeschraubt werden. Zur Befestigung des Widerstandsdrahts 13 dient wiederum die Spanneinrichtung 73 an der Feder 71. Diese Feder 71 ist zu diesem Zweck durch Isolierbuchsen 77 und Schrauben 79 elektrisch isoliert auf dem Support 11 befestigt. Die Stromzuleitung zum Schneiddraht 13 erfolgt dabei über die Klemme 81 auf eine Schraube 79, die Feder 71 und die Spanneinrichtung 73.

Auch der Halter 75 ist elektrisch isoliert auf dem Support 11 befestigt. Zu diesem Zwecke sind ebenfalls Isolierbuchsen 77 vorgesehen. Die elektrische Verbindung zum Schneiddraht 13 erfolgt dabei über die Klemme 83, die Schraube 85 und den Halter 75. Diese Ausgestaltung gestattet es, die Stromzuleitungsdrähte 86, 87 im Innern des rohrförmigen Supports 11 zu führen.

Wesentlich ist nun, dass der Halter 75 längsverschiebbar ist. Soll daher das Gerät mit der Stichsäge 63 und einem Sägedraht verwendet werden, so genügt es, den Widerstandsdraht 13 wegzunehmen, die Flügelschrauben 89 zu lösen und den nun nicht mehr benötigten Halter 75, der einen Längsschlitz (nicht einbezeichnet) aufweist, in die gestrichelt eingezeichnete Lage zu verschieben, in der er dann durch Anziehen der Flügelmuttern 89 arretiert werden kann. Es kann dann die Sticksäge 63 mit dem Sägedraht 13 wie gezeigt angebracht werden.

Wie bereits die früher beschriebenen Schneidgeräte kann das Gerät nach den Figuren 16 bis 22 mit einer Klemmvorrichtung 19 am Ständer 15 (Fig. 16) oder an einer Gerüststange 8 (Fig. 17) befestigt werden.

Die Auflage 23 für die zu schneidende Isolierplatte ist relativ zum Schneiddraht 13 beweglich.

Zur Ermöglichung der Relativbewegung ist eine Parallelführung mit zwei in Abstand voneinander angeordneten Säulen 25 vorgesehen. Die Rückstellfeder 27, die bei diesem Ausführungsbeispiel als Schraubenfeder ausgebildet ist, hält die Auflage 23 in der eingezeichneten Stellung.

Von besonderer Bedeutung ist die speziell aus den Figuren 16 und 17 ersichtliche Ausgestaltung der Auflage 23. Diese besitzt auf beiden Seiten des Schneiddrahts 13 eine Auflagefläche 23', 23''. In der Ruhestellung des Gerätes befindet sich somit der Schneiddraht 13 unterhalb der Ebene, die durch die Auflageflächen 23', 23'' gebildet wird, in einem kanal 91. Im Gegensatz zur Ausführungsform gemäss Figur 1, wo der Schneiddraht 13 auf der Seite der Auflage 23 angebracht ist, wird somit der Schneiddraht 13 durch den Kanal 91 geschützt. Es besteht also nur eine geringe Gefahr, dass beim Auflegen einer Platte der Schneiddraht 13 beschädigt wird. Nach dem Lösen von zwei Arretierschrauben 33 (Fig. 16a, 18) kann die Auflagefläche 23 um einen Winkel geneigt werden, wobei dann mit den Arretierschrauben 33 die Auflagefläche 23 in der gewünschten Winkelstellung wieder fixiert werden kann (Fig. 20). Ein Anschlag 37 (Fig. 16) ist vorgesehen, der eine normalerweise rechtwinklig zum Schneiddraht 13 ausgerichtete Anlagefläche 38 besitzt. Die Aussparung 93 besitzt eine Form, welche eine Passage des Schneiddrahts 13 bei der Ausführung von Gehrungsschnitten ermöglicht.

An der Auflage 23 ist ein schwenkbares Auflagebrett 46 befestigt, das sich in der in den Figuren 16 bis 20 dargestellten Stellung in Ruhelage befindet. Das Auflagebrett 46 kann, wie in Figur 18 strichpunktiert gezeigt, heruntergeklappt werden. In dieser Stellung befindet es sich in Figur 21. Im Gegensatz zu dem in Figur 2 dargestellten Auflagebrett 46 weist es zu beiden Seiten des Schneiddrahtes 13 eine Auflagefläche 46', 46'' (Fig. 21) auf. Es ist daher ein Schlitz 95 notwendig. Das Auflagebrett 46 ist beispielsweise von Vorteil, wenn Rundungen oder Löcher in Platten geschnitten werden müssen, wie dies vorher unter Bezugnahme auf die Figuren 9 und 10 beschrieben wurde.

Sowohl in der Auflage 23 als auch im Auflagebrett 46 sind eine oder mehrere Schwalbenschwanznuten 96, 96' oder T-Nuten vorgesehen, in welche ein Massstab 41 (Fig. 19) eingeschoben werden kann. Der Massstab 41 kann mit einer Spannschraube 98 (Fig. 18) arretiert werden. Am Masstab 41 ist der Seitenanschlag 39 drehbar angeordnet, wobei mit einem Winkelmesser 99 der gewünschte Winkel eingestellt werden kann. Eine Arretierschraube 92 dient der Arretierung des Seitenanschlages 39 in der gewünschten Winkelstellung. Der Massstab 41 mit der Spannschraube 98, dem Seitenanschlag 39, dem Winkelmesser 99 und der Schraube 92 bildet eine Anschlageinheit 100, die je nach Bedarf auf der Auflage 23 (Fig. 19) oder auf dem Auflagebrett 46 (Fig. 21) verwendet werden kann.

Es sind verschiedene Aenderungen des Schneidgerätes möglich, ohne von der Erfindung abzuweichen. So kann z.B. auch der Anschlag 37 verstellbar sein. Auch ist es möglich, ihn mit einer Winkelmessvorrichtung auszurüsten. Auch das Auflagebrett 46 könnte eine Winkelmessvorrichtung aufweisen.

Abschliessend werden noch weitere wichtige Anwendungen des Gerätes erwähnt. Es ist vorher unter Bezugnahme auf die Fig. 12 und 14 dargelegt worden, dass die Anschlageinrichtung 48 ermöglicht, Nuten 60 aus einer Schmalseite einer Platte 30 zu schneiden. Wenn aber durch die Anschlageinrichtung 48 der Schneiddraht 13 wie in Fig. 12 auf in einen vorbestimmten Abstand von der Auflage 23 eingestellt ist, können auch dicke Platten oder Blöcke in dünne Platten aufgeteilt werden, indem die dicke Platte auf der feststehenden Auflage 23 gegen den Schneiddraht 13 verschoben wird. Wird z.B. statt einer 6 cm dicken Platte eine 4 cm dicke Platte gewünscht, so wird der Abstand zwischen Schneiddraht 13 und Auflage 23 auf 4 cm eingestellt, so dass das Uebermass von 2 cm abgetrennt wird.

Weiter ist noch von Bedeutung, dass auch keilförmige Platten hergestellt werden können, wenn zusätzlich der längsverschiebbare Halter 75 (Fig. 22) so verstellt wird, dass der Schneiddraht 13 nicht mehr parallel zur Auflage 23 verläuft, wie dies in der Fig. 22 gestrichelt angedeutet ist. Es ist also möglich, eine Platte herzustellen, die z.B. an einem Ende 5 cm und am anderen Ende 3 cm dick ist.

**Patentansprüche**

1. Schneidgerät für Platten oder Blöcke aus Kunststoff, mit einem von einem Support (11) getragenen Schneiddraht (13) und mit einer mit einem Kanal (71) zur Aufnahme des Schneiddrahtes (13) versehenen Auflage (23) für die Platte oder den Block, wobei Auflage (23) und Schneiddraht (13) relativ zueinander beweglich sind, dadurch gekennzeichnet, dass eine Verstelleinrichtung (33) zum Verstellen des Winkels der Auflage (23) in Bezug auf die Bewegungsrichtung (31) der Auflage (23) beim Schneidvorgang vorgesehen ist, dass in der Auflage (23) mindestens eine Nut (96, 96') angeordnet ist, die einen in dieser Nut (96, 96') verschiebbaren und in der gewünschten Stellung feststellbaren Massstab (41) aufnimmt, und dass ein Seitenanschlag (39) an diesem Massstab (41) angeordnet ist.

2. Schneidgerät nach Anspruch 1, dadurch gekennzeichnet, dass am Massstab (41) ein verstellbarer und in der gewünschten Stellung arretierbarer Winkelmesser (99) angeordnet ist, mit dem die Winkelstellung des Seitenanschlages (39) einstellbar ist.

3. Schneidgerät nach Anspruch 1 oder 2, dadurch gekennzeichnet, dass ein Bewegungsdämpfer (27) vorgesehen ist, welcher für eine vorbestimmte Geschwindigkeit in Schnittrichtung sorgt.

4. Schneidgerät nach einem der Ansprüche 1 bis 3, dadurch gekennzeichnet, dass eine Arretierung für die obere und/oder untere Stellung der Auflage (23) vorgesehen ist.

5. Schneidgerät nach einem der Ansprüche 1 bis 4, dadurch gekennzeichnet, dass eine Parallelführung (25) für die Auflage (23) vorgesehen ist.

6. Schneidgerät nach Anspruch 5, dadurch gekennzeichnet, dass die Parallelführung zwei Säulen (25) oder Schienen aufweist.

7. Schneidgerät nach Anspruch 5, dadurch gekennzeichnet, dass die Parallelführung durch eine Schere gebildet wird.

8. Schneidgerät nach einem der Ansprüche 1 bis 7, dadurch gekennzeichnet, dass mindestens eine Rückstellfeder (27) für die Auflage (23) vorgesehen ist.

9. Schneidgerät nach einem der Ansprüche 1 bis 8, dadurch gekennzeichnet, dass an der Auflage (23) ein Anschlag (37) für eine Schmalfläche der Platte (30) vorgesehen ist, wobei der Winkel des Anschlags in bezug auf den Schneiddraht (13) verstellbar ist.

10. Schneidgerät nach einem der Ansprüche 1 bis 9, dadurch gekennzeichnet, dass an der Auflage (23) ein Auflagebrett (46) vorgesehen ist, das in einem Winkel zur Auflage (23) stellbar ist.

11. Schneidgerät nach einem der Ansprüche 1 bis 10, dadurch gekennzeichnet, dass der Support (11) aus zwei telesckopisch verschiebbaren Teilen (12, 14) besteht.

12. Schneidgerät nach einem der Ansprüche 11 bis 11, dadurch gekennzeichnet, dass der Schneiddraht (13) mit mindestens einem seiner Enden an einer Justiereinrichtung (73) befestigt ist.

13. Schneidgerät nach einem der Ansprüche 1 bis 12, dadurch gekennzeichnet, dass eine verstellbar Anschlagvorrichtung vorgesehen ist, welche die Relativbewegung zwischen Schneiddraht (13) und Auflage (23) in beiden Richtungen begrenzt.

14. Schneidgerät nach einem der Ansprüche 1 bis 13, dadurch gekennzeichnet, dass der Schneiddraht (13) mindestens an einem Ende an einem Messer (61) befestigt ist (Fig. 12a).

15. Schneidgerät nach einem der Ansprüche 1 bis 14, dadurch gekennzeichnet, dass der Schneiddraht (13) als Sägedraht ausgebildet ist, dass ein Ende des Sägedrahts (13) mittels einer Feder (71) mit dem Support (11) verbunden ist, und dass das andere Ende des Sägedrahts (13) an eine reziprozierende Antriebsvorrichtung (63) angeschlossen ist.

16. Schneidgerät nach Anspruch 15, dadurch gekennzeichnet, dass die Antriebsvorrichtung (63) durch eine handelsübliche Stichsäge gebildet wird, an deren Kopf (69) statt eines Stichsägeblatts das genannte andere Ende des Sägedrahts (13) befestigt ist.

17. Schneidgerät nach einem der Ansprüche 1 bis 16, dadurch gekennzeichnet, dass ein längsverschiebbarer Halter (75) zur Befestigung eines Endes des Schneiddrahts (13) vorgesehen ist.

18. Schneidgerät nach einem der Ansprüche 10 bis 17, dadurch gekennzeichnet, dass auch im Auflagebrett (46) mindestens eine Nut (96') angeordnet ist, um einen in dieser Nut (96') verschiebbaren und in der gewünschten Stellung feststellbaren Massstab (41) aufzunehmen.

**Revendications**

1. Appareil de coupe pour plaques ou blocs de matière plastique, comprenant un fil métallique de coupe (13) porté par un support (11) et une pièce d'appui (23) pour la plaque ou le bloc, pourvue d'un canal (71) de réception du fil de coupe (13), la pièce d'appui (23) et le fil de coupe (13) étant mobiles l'un par rapport à l'autre, caractérisé en ce qu'il est prévu un dispositif de réglage (23) pour régler l'angle de la pièce d'appui (23) relativement au sens de mouvement (31) de la pièce d'appui (23) lors du processus de coupe, en ce qu'au moins une rainure (96, 96') est prévue dans la pièce d'appui (23), rainure qui reçoit une règle graduée (41) pouvant coulisser dans cette rainure (96, 96') et pouvant être bloquée dans la position désirée, et en ce qu'un butoir latéral (39) est placé sur cette règle graduée (41).

2. Appareil de coupe suivant la revendication 1, caractérisé en ce qu'un rapporteur d'angles (99), réglable et pouvant être bloqué dans la position désirée, est disposé sur la règle graduée (41), rapporteur au moyen duquel la position angulaire du butoir latéral (39) est réglable.

3. Appareil de coupe suivant la revendication 1 ou 2, caractérisé en ce qu'il est prévu un amortisseur de mouvement (27), qui assure le maintien d'une vitesse prédéterminée dans la direction de coupe.

4. Appareil de coupe suivant l'une des revendications 1 à 3, caractérisé en ce qu'un dispositif d'arrêt est prévu pour la position supérieure et/ou la position inférieure de la pièce d'appui (23).

5. Appareil de coupe suivant l'une des revendications 1 à 4, caractérisé en ce que des moyens parallèles de guidage (25) sont prévus pour la pièce d'appui (23).

6. Appareil de coupe suivant la revendication 5, caractérisé en ce que les moyens parallèles de guidage comportent deux colonnes (25) ou deux rails.

7. Appareil de coupe suivant la revendication 5, caractérisé en ce que les moyens parallèles de guidage sont constitués par une limonière.

8. Appareil de coupe suivant l'une des revendications 1 à 7, caractérisé en ce qu'il est prévu au moins un ressort de rappel (27) pour la pièce d'appui (23).

9. Appareil de coupe suivant l'une des revendications 1 à 8, caractérisé en ce qu'il est prévu sur la pièce d'appui (23) une butée (37) pour une face étroite de la plaque (30).

10. Appareil de coupe suivant l'une des revendications 1 à 9, caractérisé en ce qu'il est prévu contre la pièce d'appui (23) une planche d'appui (46), dont la position par rapport à la pièce d'appui (23) est réglable angulairement.

11. Appareil de coupe suivant l'une des revendications 1 à 10, caractérisé en ce que le support (11) se compose de deux pièces (12, 14) coulissant l'une dans l'autre télescopiquement.

12. Appareil de coupe suivant l'une des revendications 1 à 11, caractérisé en ce que le fil de coupe (13) est fixé à un dispositif d'ajustage (73) à l'une au moins de ses extrémités.

13. Appareil de coupe suivant l'une des revendications 1 à 12, caractérisé en ce qu'il est prévu un dispositif de butée réglable, qui limite le mouvement relatif entre le fil de coupe (13) et la pièce d'appui (23) dans les deux directions.

14. Appareil de coupe suivant l'une des revendications 1 à 13, caractérisé en ce que le fil de coupe (13) est fixé à un couteau (61) à l'une au moins de ses extrémités (figure 12a).

15. Appareil de coupe suivant l'une des revendications 1 à 14, caractérisé en ce que le fil de coupe (13) est sous forme d'un fil en dents de scie, en ce qu'une extrémité de ce fil (13) est liée au support (11) au moyen d'un ressort (71), et en ce que l'autre extrémité de ce fil en dents de scie (13) est raccordée à un dispositif d'entraînement (63) imprimant un mouvement alternatif.

16. Appareil de coupe suivant la revendication 15, caractérisé en ce que le dispositif d'entraînement (63) est constitué par une scie à guichet du commerce, sur la tête (69) de laquelle est fixée, au lieu d'une lame de scie à guichet, ladite autre extrémité du fil en dents de scie (13).

17. Appareil de coupe suivant l'une des revendications 1 à 16, caractérisé en ce qu'il est prévu une tige-support (75) pour la fixation d'une extrémité du fil de coupe (13).

18. Appareil de coupe suivant l'une quelconque des revendications 10 à 17, caractérisé en ce qu'il est prévu également dans la planche d'appui (46) au moins une rainure (96') destinée à recevoir une règle graduée (41) susceptible de coulisser dans cette rainure (96') et d'y être bloquée dans la position désirée.

**Claims**

1. Cutter apparatus for plates or blocks of plastic material, with a cutter wire (13) carried by a support (11), and a support table (23) for the plate or block, said support table comprising a channel to receive the cutter wire (13), said support table (23) and said cutter wire (13) being capable of moving relative to each other, characterised in that an ajusting device (33) is provided for adjusting the angle of the support table (23) with respect to the direction (31) of motion of the support table (23) during a cutting operation, in that at least one groove (96, 96') is located in the support table (23) which receives a rule which is slidable in this groove and can be fixed in the desired position, and in that a lateral stop (39) is located on this rule (41).

2. Cutter apparatus as in claim 1, characterised in that at the rule (41) a goniometer (99) is located which can be adjusted and fixed in the desired position for adjusting the angular position of the lateral stop (39).

3. Cutter apparatus as in claim 1 or 2, characterised in that a motion damping device (27) is provided which provides for a predetermined speed in cutting direction.

4. Cutter apparatus as in one of the claims 1 to 3, characterised in that a stop is provided for the upper and/or lower position of the support table (23).

5. Cutter apparatus as in one of the claims 1 to 4, characterised in that a parallel guide (25) for the support table (23) is provided.

6. Cutter apparatus as in claim 5, characterised in that the parallel guide comprises two posts (25) or rails.

7. Cutter apparatus as in claim 5, characterised in that the parallel guide is embodied by a scissors mechanism.

8. Cutter apparatus according to one of the claims 1 to 7, characterised in that at least one reset spring (27) for the support table (23) is provided.

9. Cutter apparatus according to one of the claims 1 to 8, characterised in that at the support table (23) a stop (37) is provided for one narrow face of the plate (30), the angle of the stop being adjustable with respect to the cutter wire (13).

10. Cutter apparatus according to one of the claims 1 to 9, characterised in that at the support table (23) a support plate (46) is provided which is positionable at an angle to the support table (23).

11. Cutter apparatus according to one of the claims 1 to 10, characterised in that the support (11) comprises two telescopically displaceable parts (12, 14).

12. Cutter apparatus according to one of the claims 1 to 11, characterised in that the cutter wire (13) is affixed by at least one of its ends to an adjustment device (73).

13. Cutter apparatus according to one of the claims 1 to 12, characterised in that an adjustable stop device is provided which limits the relative movement between the cutter wire (13) and the support table (23) in both directions.

14. Cutter apparatus according to one of the claims 1 to 13, characterised in that the cutter wire (13) is connected at at least one end to the knife (61) (Fig. 12a).

15. Cutter apparatus according to one of the claims 1 to 14, characterised in that the cutter wire (13) is formed as a wire saw, in that one end of the wire saw (13) is connected to the support by means of a spring (71), and in that the other end of the wire saw (13) is connected to a reciprocating drive mechanism (63).

16. Cutter apparatus according to claim 15, characterised in that the drive mechanism 63 is embodied by a commerically available sabre saw, to the head (69) of which said other end of the wire saw (13), instead of a sabre saw blade, is affixed.

17. Cutter apparatus according to one of the claims 1 to 16, characterised in that a longitudinally displaceable holder (75) is provided for securing one end of the cutter wire (13).

18. Cutter device according to one of the claims 10 to 17, characterised in that also in the support plate (46) at least one groove (96') is disposed for receiving a rule (41) which is slidable in this groove and can be fixed in the desired position.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 12a

Fig. 13

Fig. 14

Fig. 15

Fig.16

Fig.17

Fig.16a

Fig.18

Fig.19

Fig.20

Fig.21

Fig. 22